# FASCICULE DE BREVET EUROPEEN

(11) **EP 1 885 633 B1**
(45) Date de publication et mention de la délivrance du brevet: **24.03.2010**
(21) Numéro de dépôt: 06764632.3
(22) Date de dépôt: 16.05.2006
(51) Int. Cl.: B65G 25/02, F27B 9/20

(54) **CONVOYEUR A PAS DE PELERIN A CONDUCTION THERMIQUE REDUITE**
PILGERFÖRDERER MIT VERRINGERTER WÄRMELEITUNG
PILGER CONVEYOR WITH REDUCED THERMAL CONDUCTION

(30) Priorité: 30.05.2005 FR 0505427
(43) Date de publication de la demande: 13.02.2008
(73) Titulaire: VIT, 06370 Mouans Sartoux (FR)
(72) Inventeur: CANOLLE, Claude, F-06600 Antibes (FR); LANTERI, Alain, F-06510 Carros (FR)
(74) Mandataire: Fruchard, Guy
(86) Numéro de dépôt international: PCT/FR2006/001095
(87) Numéro de publication internationale: WO 2006/128986

(56) Documents cités:
- US-A- 666 865
- US-A- 5 082 165
- US-A- 5 449 062

## Description

La présente invention concerne un convoyeur à pas de pèlerin à conduction thermique réduite, notamment bien que non exclusivement pour le traitement thermique des cartes électroniques dans un four de refusion. Selon le préambule de la revendication 1. Un tell convoyeur est décrit dans le document US-A-5 082 165.

### ARRIERE PLAN DE L'INVENTION

On connaît du document FR-A-2 833 456 un four de refusion comportant différentes chambres, chacune maintenue à une température donnée afin de soumettre progressivement les cartes électroniques traversant le four à un cycle de température approprié pour réaliser une soudure des composants montés sur les cartes.

Afin de minimiser les transferts de chaleur d'une chambre à l'autre, il est prévu dans ce document de réaliser une installation avec plusieurs convoyeurs séparés chacun disposé dans une chambre. Une telle structure est coûteuse et pose des problèmes de synchronisation des convoyeurs lors de l'entraînement des cartes électroniques.

Il est par ailleurs connu de réaliser un four comportant un convoyeur unique, par exemple un convoyeur à pas de pèlerin, traversant le four d'une extrémité à l'autre. Dans ce cas, les éléments de convoyage continus réalisent entre les chambres un pont thermique qui génère un gradient longitudinal de température le long du convoyeur. Lors d'une utilisation pour un four de refusion, ce gradient générerait une hétérogénéité de température sur les bords d'une carte en contact avec le convoyeur, ce qui serait néfaste au process et générerait des déformations de la carte.

### OBJET DE L'INVENTION

Un but de l'invention est de proposer un convoyeur à pas de pèlerin pouvant s'étendre entre plusieurs chambres à des températures différentes tout en minimisant la conduction thermique avec les articles transportés.

### RESUME DE L'INVENTION

En vue de la réalisation de ce but, on prévoit, selon l'invention un convoyeur à pas de pèlerin comportant un châssis portant des rails fixes et des rails mobiles associés à des organes de levage et des organes de coulissement pour effectuer un déplacement des rails supports mobiles selon un mouvement de levage et un mouvement de coulissement, dans lequel les rails supports comportent des lames supports minces fixées aux rails supports pour s'étendre en saillie d'un bord supérieur des rails supports.

Ainsi la section de passage de la chaleur se trouve réduite de sorte que le gradient longitudinal est réduit. En outre, les articles reposent sur le bord des lames supports minces de sorte que la zone de contact des articles avec les lames supports est extrêmement réduite et le faible transfert de chaleur qui en résulte est insuffisant pour provoquer des déformations des articles transportés.

Selon une version avantageuse de l'invention, les lames supports minces comportent des échancrures, de préférence les échancrures s'étendent entre les points de fixation des lames supports sur les rails supports. On réduit ainsi encore la section de passage de la chaleur.

Selon un mode de réalisation préféré de l'invention, les lames supports minces sont divisées en segments séparés par des intervalles. On élimine ainsi la conduction thermique longitudinale dans les lames entre les différentes chambres.

### BREVE DESCRIPTION DES DESSINS

D'autres caractéristiques et avantages de l'invention apparaîtront à la lecture de la description qui suit d'un mode de réalisation particulier non limitatif du convoyeur à pas de pèlerin selon l'invention, en relation avec les figures ci-jointes parmi lesquelles :
- la figure 1 est une vue en perspective partielle illustrant la structure du châssis du convoyeur selon l'invention,
- la figure 2 est une vue en perspective schématique illustrant une structure de base du convoyeur selon l'invention,
- la figure 3 est une vue en perspective partielle montrant l'agencement d'un organe de levage et la relation avec un longeron de coulissement auquel est raccordée une extrémité d'un organe de coulissement,
- la figure 4 est une vue en perspective de la commande de mouvement des organes de levage,
- la figure 5 est une vue en perspective partielle illustrant la structure des organes de coulissement,
- la figure 6 est une vue en élévation de l'extrémité d'un rail support fixe et d'un rail support mobile assemblés et du boîtier les supportant.

### DESCRIPTION DETAILLEE DE L'INVENTION

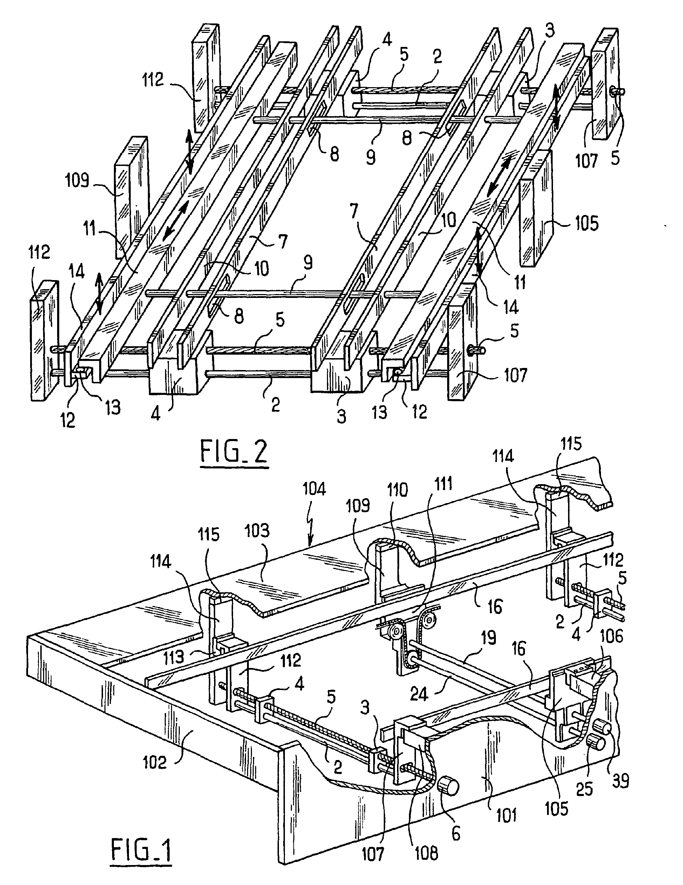

En référence à la figure 1, le châssis du convoyeur selon l'invention comporte une plaque de base frontale 101 verticale qui s'étend sur un côté du convoyeur. Les extrémités de la plaque de base frontale 101 sont reliées par des plaques entretoises 102, dont une seule est représentée sur la figure 1, à une plaque latérale supérieure 103 qui s'étend horizontalement au-dessus du côté du convoyeur opposé à la plaque de base frontale 101. La plaque de base frontale 101, les plaques entretoises 102 et la plaque latérale supérieure 103 constituent ainsi une partie de châssis formant un cadre généralement désigné par la référence numérique 104.

A mi-distance entre les plaques entretoises 102, une potence de référence 105 est rigidement fixée à la plaque de base frontale 101 par l'intermédiaire d'un bloc thermiquement isolant 106. Une plaque support allongée 16 thermiquement déformable, par exemple une plaque en aluminium, est disposée horizontalement selon une direction longitudinale du convoyeur et comporte une partie de référence centrale qui est rigidement fixée à la potence 105. La plaque support 16 s'étend de part et d'autre de la partie centrale de référence et supporte au voisinage de ses extrémités des potences 107 (dont une seule est représentée sur la figure 1) fixées à la plaque 16 et comportant à leur partie supérieure une aile horizontale prenant appui sur un bloc thermiquement isolant 108 fixé à la plaque de base frontale 101. La potence 107 est ainsi libre de coulisser lors des déformations longitudinales de la plaque support 16 sous l'effet de variations de températures. De cette façon on évite une déformation transversale de la plaque support 16 dans les zones de températures différentes traversées par la plaque support 16, et on évite la déformation qui serait engendrée par la différence de dilatation entre la plaque support 16 et la plaque de base 101.

Sur le côté opposé du convoyeur, le châssis comporte un mat central 109 qui s'étend verticalement sous la plaque de base supérieure 103 et est rigidement fixé à celle-ci par l'intermédiaire d'un bloc thermiquement isolant 110. Une potence 111 analogue à la potence 105 est rigidement fixée au mat central 109 pour s'étendre en face de la potence 105. Une seconde plaque support 16 analogue à la plaque support 16 précédemment décrite, s'étend longitudinalement sur le côté du convoyeur et a une partie centrale de référence qui est rigidement fixée à la potence 111. Au voisinage des extrémités de cette plaque support et en regard des potences 107, le châssis du convoyeur comporte des potences 112 fixées à la plaque support 16 et comportant au voisinage de leur partie supérieure, une aile horizontale qui prend appui sur un bloc 113 porté par un mat 114 fixé à la plaque de base supérieure 103 par l'intermédiaire d'un bloc thermiquement isolant 115. Comme pour la plaque support 16 associée à la potence 105, la plaque support 16 associée à la potence 111 est donc fixée dans sa partie centrale de référence et est libre de se déformer longitudinalement en dehors de la partie de référence. La plaque support 16 ne subit donc aucune déformation transversale lorsqu'elle traverse les zones du convoyeur à des températures différentes et quelle que soit la différence de température entre la plaque support 16 et la plaque supérieure 103.

En référence à la figure 2, celle-ci illustre une structure de base du convoyeur selon l'invention de façon extrêmement schématique et pour une meilleure compréhension ses différents éléments ont été représentés à des dimensions et selon des distances sans rapport avec la réalité.

Selon cette illustration très schématique, les potences 107 et 112 sont reliées par paires par des poutres transversales 2 sur lesquelles sont montées une paire de boîtiers 3 qui sont fixés dans une position déterminée sur les poutres transversales 2 et une paire de boîtiers mobiles 4 qui sont montés pour coulisser sur les poutres transversales 2. La position de chaque boîtier mobile 4 est réglée par une vis sans fin 5 ayant une extrémité fixée à un mat 114 pour tourner librement par rapport à celui-ci et coopérant avec un écrou du boîtier correspondant 4 et entraînée en rotation par un moteur 6 porté par la plaque de base frontale 101 (figure 1). Les boîtiers fixes 3 sont simplement traversés par les vis sans fin 5 sans interaction entre les vis sans fin et les boîtiers 3. Afin de ne pas interférer avec les vis sans fin 5 lors des variations de longueur des plaques supports 16, les potences 107 et 112 comportent des lumières oblongues pour le passage des vis 5.

Chaque paire de boîtiers porte un rail fixe 7 qui est fixé à la partie supérieure des boîtiers correspondants. Chaque rail fixe 7 comporte des fenêtres 8 pour permettre un passage et un mouvement de débattement de traverses 9 portant des rails mobiles 10. Les extrémités des traverses 9 sont fixées à des longerons latéraux 11. Les rails mobiles 10 associés aux boîtiers mobiles 4 sont montés sur les traverses 9 avec un jeu suffisant pour permettre un déplacement latéral sans frottement des rails mobiles 10 lors du déplacement latéral des boîtiers 4. Les rails supports mobiles 10 sont de préférence montés à l'extérieur des rails fixes 7 par rapport à un axe longitudinal du convoyeur.

Les longerons latéraux 11 sont montés par l'intermédiaire de joncs anti-friction 13 pour coulisser sur des profilés de levage 12. Les longerons latéraux 11 sont déplacés par des organes de coulissement non représentés sur la figure 2 et simplement symbolisés par des flèches doubles horizontales sur cette figure. Les profilés de levage 12 sont portés par des plaques de levage 14 associées au châssis du convoyeur par des organes de levage non représentés sur la figure 2 et simplement symbolisés par des flèches verticales doubles sur cette figure.

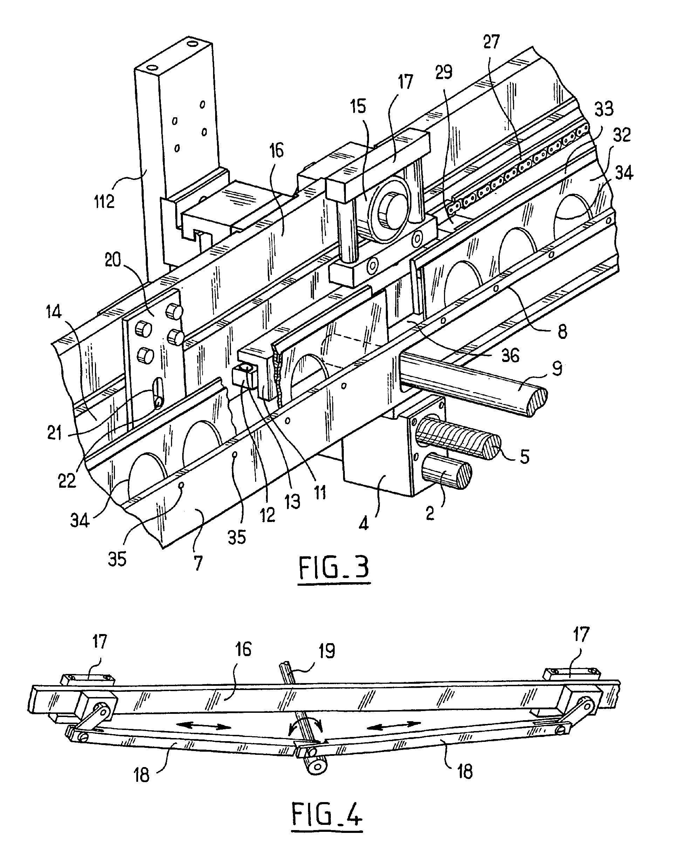

La figure 3 illustre de façon partielle un mode de réalisation de l'invention. Sur cette figure les éléments déjà décrits sont illustrés avec la même référence numérique, des références numériques supplémentaires étant attribuées aux éléments non représentés sur la figure 2.

En particulier, cette figure illustre, en relation avec une potence 112, un organe de levage comprenant un disque excentrique 15 porté par la plaque support 16. Une cage d'excentrique 17 est supportée par le disque excentrique 15 et est fixée à sa partie inférieure à la plaque de levage 14 correspondante. Le convoyeur comporte deux organes de levage sur chaque côté et les disques excentriques 15 sont commandés de façon simultanée comme illustré par la figure 3 par un embiellage 18 associé à un axe 19 relié à un moteur 39 porté par la plaque de base frontale 101 (figure 1).

Comme illustré par la figure 3, le mouvement selon une direction verticale seulement des plaques de levage 14 est obtenu au moyen de plaques de guidage 20 portées par les plaques supports 16 et comprenant une lumière verticale 21 dans laquelle est engagé un ergot 22 porté par la plaque de levage 14 correspondante.

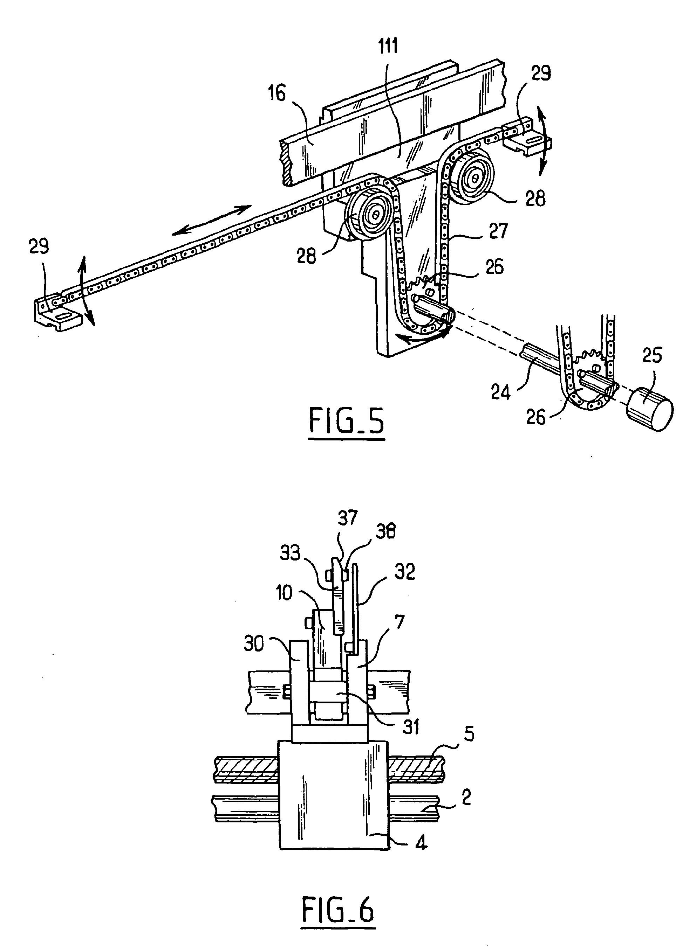

Comme illustré par la figure 5, les organes de coulissement sont portés par les potences 105 et 111. Dans l'exemple illustré, la potence 111 supporte un arbre cannelé 24 entraîné en rotation par un moteur 25 porté par la plaque de base frontale 101. L'axe 24 porte un pignon 26 sur lequel une chaîne 27 forme une boucle maintenant la chaîne 27 appliquée sur le pignon 26. De part et d'autre du pignon 26 la chaîne 27 s'étend sensiblement verticalement et est renvoyée horizontalement en passant sur des poulies de renvoi 28 montées pour tourner librement sur la potence 111. Les extrémités de la chaîne 27 sont fixées en deux points espacés d'un longeron de coulissement latéral 11 au moyen de brides 29.

De préférence comme illustré sur la figure 5, l'arbre d'entraînement 24 traverse le convoyeur et sert à entraîner un pignon 26 d'un organe de coulissement identique porté par la potence 105 sur le côté opposé du convoyeur. Les deux organes de coulissement sont ainsi entraînés en synchronisme. Les deux organes de coulissement sont de préférence montés à mi-distance des extrémités du convoyeur.

Ainsi que cela est illustré par des flèches épaisses doubles sur la figure 5, les mouvements de levage des longerons de coulissement sont possibles sans blocage des organes de coulissement en raison d'un pivotement des brins d'extrémité de la chaîne 27 autour des poulies de renvoi 28.

Pour permettre un débattement latéral dans les deux sens du rail mobile 10 associé à un boîtier mobile 4, le rail fixe 7, fixé aux boîtiers 4, est de préférence associé à une joue 30 (voir figure 6) reliée au rail fixe 7 par des entretoises 31 de façon à prendre le rail mobile 10 en sandwich sans gêner les mouvements de celui-ci.

En référence aux figures 3 et 6, le convoyeur selon l'invention dans son mode de réalisation préféré comporte des dispositions minimisant le transfert thermique par conduction longitudinale des rails et par contact entre les rails supports et les cartes transportées par le convoyeur. A cet effet, les rails fixes sont de préférence équipés de lames supports minces 32 fixées aux rails supports fixes pour s'étendre en saillie d'un bord supérieur des rails. De même, les rails mobiles 10 comportent des lames supports minces 33 fixées aux rails supports mobiles 10 pour s'étendre en saillie d'un bord supérieur des rails. Les lames supports 33 comportent de préférence une rampe de guidage 37 et sont équipées d'une barrette de levage 38 en saillie du côté de la rampe de guidage 37. De préférence pour minimiser encore le transfert par conduction, les lames supports 32, 33 comportent des échancrures 34 qui s'étendent entre les points de fixation 35 des lames supports sur les rails supports.

De plus, afin de minimiser la conduction thermique longitudinale dans les lames supports, celles-ci sont de préférence divisées en segments séparés par un intervalle 36 (figure 3) correspondant à la limite entre deux chambres à des températures différentes.

Dans une position d'arrêt, les cartes électroniques sont en appui sur le bord supérieur des lames supports minces 32. A partir de cette position les excentriques 15 sont manoeuvrées pour soulever les profilés de levage 12 qui entraînent les traverses 9 vers le haut et par voie de conséquence amènent les barrettes de levage 38 en contact avec la face inférieure de la carte, la rampe de guidage 37 de la lame 33 assurant simultanément un positionnement latéral correct de la carte. Pour une position haute des organes de levage, la carte électronique est ainsi maintenue au-dessus du bord supérieur des lames supports 32 et une manoeuvre des organes de coulissement provoque un déplacement longitudinal de la carte électronique sans frottement. Après arrêt du coulissement, les organes de levage sont manoeuvrés vers le bas pour reposer la carte électronique sur le bord supérieur des lames minces 32, et les organes de coulissement sont manoeuvrés pour ramener les rails supports mobiles à leur position de départ.

Bien entendu, l'invention n'est pas limitée au mode de réalisation décrit et on peut y apporter des variantes de réalisation sans sortir du cadre de l'invention tel que défini par les revendications.

En particulier, bien que l'invention ait été illustrée en relation avec un convoyeur à pas de pèlerin présentant une structure particulière, l'invention s'applique à tout convoyeur à pas de pèlerin comportant des rails fixes et des rails mobiles associés à des organes de levage et des organes de coulissement pour effectuer un déplacement des rails supports mobiles selon un mouvement de levage et un mouvement de coulissement.

Bien que les rails supports aient été illustrés sous forme de plaques, ils peuvent être réalisés sous forme d'éléments tubulaires.

Bien que les lames supports aient été illustrées avec des échancrures du côté du rail support, les échancrures peuvent être réalisées du côté du bord libre ou simultanément sur les deux côtés des lames supports minces.

## Revendications

1. Convoyeur à pas de pèlerin comportant un châssis portant des rails fixes (7) et des rails mobiles (10) associés à des organes de levage et des organes de coulissement pour effectuer un déplacement des rails supports mobiles (10) selon un mouvement de levage et un mouvement de coulissement, **caractérisé en ce que** les rails supports (7, 10) comportent des lames supports minces (32, 33) fixées aux rails supports pour s'étendre en saillie d'un bord supérieur des rails supports.

2. Convoyeur selon la revendication 1, **caractérisé en ce que** les lames supports minces (32, 33) comportent des échancrures (34).

3. Convoyeur selon la revendication 2, **caractérisé en ce que** les échancrures (34) s'étendent entre des points de fixation (35) des lames supports sur les rails supports.

4. Convoyeur selon la revendication 1, **caractérisé en ce que** les lames supports (32,33) sont divisées en segments séparés par des intervalles (36).

## Claims

1. A walking-beam conveyor comprising a frame supporting stationary beams (7) and moving beams (10) associated with lifter members and with slider members for causing the moving support beams (10) to move with lifting movement and with sliding movement, the conveyor being **characterized in that** the support beams (7, 10) include thin support blades (32, 33) fastened to the support beams to project from top edges of the support beams.

2. A conveyor according to claim 1, **characterized in that** the thin support blades (32, 33) include cutouts (34).

3. A conveyor according to claim 2, **characterized in that** the cutouts (34) extend between fastener points (35) where the support blades are fastened to the support beams.

4. A conveyor according to claim 1, **characterized in that** the support blades (32, 33) are subdivided into segments separated by gaps (36).

## Patentansprüche

1. Pilgerschrittförderer, umfassend ein Gestell, das ortsfeste Schienen (7) und bewegliche Schienen (10) trägt, die mit Hubelementen und Gleitelementen verbunden sind, um eine Verschiebung der beweglichen Tragschienen (10) gemäß einer Hubbewegung und einer Gleitbewegung zu bewirken, **dadurch gekennzeichnet, dass** die Tragschienen (7, 10) dünne Traglamellen (32, 33) umfassen, die an den Tragschienen befestigt sind, so dass sie über einen oberen Rand der Tragschienen vorstehen.

2. Förderer nach Anspruch 1, **dadurch gekennzeichnet, dass** die dünnen Traglamellen (32, 33) Aussparungen (34) umfassen.

3. Förderer nach Anspruch 2, **dadurch gekennzeichnet, dass** sich die Aussparungen (34) zwischen Befestigungspunkten (35) zum Befestigen der Traglamellen an den Tragschienen erstrecken.

4. Förderer nach Anspruch 1, **dadurch gekennzeichnet, dass** die Traglamellen (32, 33) in Segmente unterteilt sind, die durch Zwischenräume (36) getrennt sind.
